# EUROPÄISCHE PATENTSCHRIFT

(11) **EP 3 111 120 B1**
(45) Veröffentlichungstag und Bekanntmachung des Hinweises auf die Patenterteilung: **24.01.2018**
(21) Anmeldenummer: 15702967.9
(22) Anmeldetag: 07.02.2015
(51) Int. Cl.: F16K 5/06, F16K 37/00

(54) **KUGELHAHN**
BALL VALVE
ROBINET À BOISSEAU SPHÉRIQUE

(30) Priorität: 28.02.2014 DE 102014002917
(43) Veröffentlichungstag der Anmeldung: 04.01.2017
(73) Patentinhaber: HYDAC Accessories GmbH, 66280 Sulzbach/Saar (DE)
(72) Erfinder: MEIER, Pascal, 66538 Neunkirchen (DE)
(74) Vertreter: Bartels & Partner
(86) Internationale Anmeldenummer: PCT/EP2015/000254
(87) Internationale Veröffentlichungsnummer: WO 2015/128058

(56) Entgegenhaltungen:
- EP-A1- 0 063 010
- EP-A1- 0 646 745
- DE-A1-102009 025 576
- DE-U1-202006 006 806

## Beschreibung

Die Erfindung betrifft einen Kugelhahn gemäß dem Patentanspruch 1.

Im Stand der Technik werden Kugelhähne bei Fluidsystemen unterschiedlichster Art meist als Absperrorgane eingesetzt, können jedoch auch als Ablassventile oder für andere Aufgaben benutzt werden. Zwischen der das Absperrorgan bildenden Ventilkugel und das Ventilgehäuse sind in der Regel Dichtringe oder Dichtschalen aus Kunststoff, wie PTFE, eingebaut, bei höheren Betriebstemperaturen können auch metallische Dichtungen verwendet werden. Die Kugelhähne zeichnen sich durch eine gute Dichtheit aufgrund der durch den Fluiddruck unterstützten Anlagekräfte zwischen Ventilkugel, Dichtringen sowie zwischen letzteren und dem Ventilgehäuse aus. Ein weiterer Vorteil ist das schnelle Schaltverhalten. Bei einem geradlinigen, in der Ventilkugel befindlichen Fluiddurchgang erfolgt das vollständige Schließen innerhalb einer Drehung der Ventilkugel von genau 90°, was kürzere Betätigungszeiten im Vergleich zu Absperrhähnen anderer Bauweise ermöglicht. Auch ergeben sich bei einem Querschnitt des Fluiddurchganges der Ventilkugel, der dem Leitungsquerschnitt an den Anschlussstellen entspricht, sehr geringe Strömungsverluste im Öffnungszustand.

Aus DE 20 2006 006 806 U1 ist eine Dreharmatur aus Kunststoff bekannt mit
- einem Kunststoffgehäuse, das einen Einlass und einen Auslass aufweist,
- einem Drehkörper, der eine Durchgangsöffnung zum Verbinden der Gehäuseein- und -auslässe aufweist und unter Zwischenschaltung von Dichtungen verdrehbar im Gehäuse angeordnet ist,
- einer Betätigungswelle, die zum Schalten des Drehkörpers zwischen einer Absperr- und Schließstellung dient und drehfest mit dem Drehkörper verbunden ist und Mitteln zum Abfragen wenigstens einer Drehposition.
Dabei weisen die Mittel zum Abfragen wenigstens einer Drehposition, eine Näherungsdetektoranordnung mit wenigstens einer elektrisch, optoelektronisch oder magneto-elektronisch aktiven Komponente und einer reaktiven Komponente auf. Eine der beiden Komponenten ist in lagefester Zuordnung an oder nahe dem Gehäuse angeordnet und die andere Komponente ist in den Drehkörper eingebettet.

EP 0 063 010 A1 betrifft eine Vorrichtung zur Bestimmung der Stellung eines Ventils, die in betrieblicher Verbindung eine radioaktive Strahlungsquelle, die entweder auf oder neben der Außenfläche des Ventils oder innerhalb des Ventils angeordnet ist, und einen Strahlungsdetektor aufweist, der auf oder neben der Außenfläche des Ventils angeordnet ist, wobei die relative räumliche Anordnung der Strahlungsquelle und des Detektors derart ist, dass die durch den Detektor erfasste Impulsfrequenz die Stellung des Ventils anzeigt.

EP 0 646 745 A1 betrifft einen Kugelventilaufbau umfassend einen Ventilkörper, der einen Durchgang dort hindurch für den Fluß von Medium aufweist, eine drehbar innerhalb des Körpers angebrachte Kugel, die ausgelegt ist, den Durchgang in einem geschlossenen Zustand des Ventils zu versperren, und die ein Tor aufweist, das ausgelegt ist, sich in einem offenen Zustand des Ventils in Verbindung mit dem Durchgang zu befinden, und einen Signalempfänger, der ein Ultraschallempfänger ist, der in der Lage ist, ein Ultraschallsignal aus dem Inneren des Ventilkörpers zu detektieren.

Die Betätigung einiger bekannter Kugelhähne erfolgt manuell mittels eines an der Schaltwelle angreifenden Schwenkhebels. Alternativ kann für eine automatische Betätigung, beispielsweise an manuell schwer zugänglichen Stellen ein motorischer Stellantrieb vorgesehen sein. Für die Drehbewegung der Schaltwelle über den Winkelbereich von 90° zwischen Sperrstellung und Offenstellung ist an dem aus dem Gehäuse ragenden Zapfen der Schaltwelle üblicherweise eine eine Art Kulisse bildende Kurvenscheibe mit den 90°-Bereich begrenzenden Endanschlägen vorgesehen, die mit einem zugeordneten Anschlagzapfen am Ventilgehäuse zusammenwirken. Im Betrieb erfolgt die Kontrolle der jeweiligen Schaltposition der Ventilkugel über die Schaltwelle, d.h. die Kontrolle der Drehstellung der Schaltwelle mit der daran angebrachten Kurvenscheibe relativ zum Anschlagzapfen des Gehäuses. Diese Art der auch optisch vorgenommenen Zustandsüberwachung ist in vielen Fällen nicht zufriedenstellend und insbesondere dann ungenügend, wenn ein betreffender Kugelhahn für sicherheitsrelevante Schaltfunktionen eingesetzt ist. Bei über die Schaltwelle abgenommener Kontrolle ist die tatsächliche Schaltposition der Kugel nicht sichergestellt. Bei einem Bruch der Schaltwelle oder einem Versagen der mechanischen Kupplung der Kugel mit der Schaltwelle ist insoweit keine sichere Kontrolle der Kugelposition möglich.

Im Hinblick auf diese Problematik stellt sich die Erfindung die Aufgabe, einen Kugelhahn zur Verfügung zu stellen, der eine sichere Kontrolle der Kugelposition ermöglicht.

Erfindungsgemäß ist diese Aufgabe durch einen Kugelhahn gelöst, der die Merkmale des Patentanspruchs 1 in seiner Gesamtheit aufweist.

Gemäß dem Anspruch 1 betrifft die Erfindung einen Kugelhahn, mit einem Ventilgehäuse, das mindestens zwei Fluidanschlussstellen und eine im Ventilgehäuse befindliche ferromagnetische Ventilkugel aufweist, die mittels einer Schaltwelle, die zumindest teilweise in das Ventilgehäuse eingreift, in Schaltpositionen drehbetätigbar ist, in denen über einen Fluiddurchgang der Ventilkugel eine Fluidverbindung zwischen Fluidanschlussstellen freigegeben oder gesperrt ist. Eine wesentliche Besonderheit der Erfindung besteht darin, dass eine Sensoranordnung vorgesehen ist, die die jeweilige Schaltposition der Ventilkugel durch Ablesen einer an dieser befindlichen Lageinformation erkennt und die zwei in das Ventilgehäuse eingesetzte Sensoren aufweist. Dadurch, dass dergestalt die Anzeige der Schaltposition nicht über die Schaltwelle abgenommen wird, ist eine absolut sichere Anzeige der tatsächlichen Schaltposition ermöglicht. Fehler, wie sie bei einigen Kugelhähnen aus dem Stand der Technik etwa durch Versagen der Schaltwelle oder deren Kupplung mit der Ventilkugel oder durch Fehlfunktionen eines Stellantriebes für die Schaltwelle auftreten können, lassen sich dadurch vermeiden, so dass der erfindungsgemäße Kugelhahn auch für einen Einsatz bei Systemen geeignet ist, bei denen hohe Sicherheitsanforderungen zu stellen sind.

Als für unterschiedliche Abtastverfahren der Sensoranordnung geeignete Lagemarken, die auf einfache Weise an der Ventilkugel anbringbar sind, sind erfindungsgemäß Vertiefungen, vorzugsweise in Form von Sackbohrungen, in der Außenfläche der Ventilkugel vorgesehen.

Ferner ist erfindungsgemäß für eine berührungslose Abtastung eine Ventilkugel aus einem ferromagnetische Eigenschaft aufweisenden Werkstoff vorgesehen, wobei als Sensoren induktive Näherungsschalter vorgesehen sind, die zur Erzeugung eines Schaltsignals die auf einen Sensor ausgerichtete Position einer Sackbohrung der Ventilkugel erkennen. Dadurch ist auf besonders sichere Weise ein die genaue Position der Ventilkugel kennzeichnendes Schaltsignal aufgrund der Änderung der Induktivität generierbar, die sich ergibt, wenn eine Sackbohrung in eine auf das Kern- oder Detektorelement eines Näherungsschalters genau ausgerichtete Position gelangt.

Bei besonders vorteilhaften Ausführungsbeispielen ist die Lageinformation durch ein an der Ventilkugel befindliches Muster aus mehr als einer Lagemarke gebildet, wobei die Sensoranordnung mindestens einen dem Ventilgehäuse zugeordneten, Lagemarken erkennenden Sensor aufweist. Bei mehr als einer Lagemarke lassen sich Anzeigen sowohl für die vollständig geöffnete Position als auch für die geschlossene Position der Ventilkugel generieren.

Diesbezüglich können bei einem Kugelhahn, bei dem die Ventilkugel einen im rechten Winkel zur Drehachse der Schaltwelle geradlinig verlaufenden Fluiddurchgang aufweist, als Lageinformation zwei Lagemarken vorgesehen sein, die jede zur Drehachse versetzt angeordnet sind. Da die Sensoranordnung hierbei zwei in das Ventilgehäuse eingesetzte Sensoren aufweist, lässt sich nicht nur eine Anzeige der Offenstellung und der Schließstellung generieren, sondern auch eine eindeutige Anzeige, dass sich die Ventilkugel in einer nicht definierten Zwischenstellung befindet.

Mit besonderem Vorteil können die Sensoren im Abstand voneinander auf einer geraden Linie angeordnet sein, die die Drehachse der Schaltwelle schneidet und zur Richtung des in der Offenstellung befindlichen Fluiddurchgangs der Ventilkugel im rechten Winkel verläuft.

Bei vorteilhaften Ausführungsbeispielen sind die Sensoren als Einsätze, vorzugsweise durch Einschrauben, in Durchgangsbohrungen des Ventilgehäuses aufgenommen, wobei in den Durchgangsbohrungen und an den Einsätzen Dichtflächen für ein eine druckfeste Abdichtung bildendes Dichtelement gebildet sind. Dadurch ist das Ventilgehäuse auch gegen einen sich im Totraum zwischen Kugeloberfläche und Ventilgehäuse aufbauenden Druck abgedichtet.

Nachstehend ist die Erfindung anhand eines in der Zeichnung dargestellten Ausführungsbeispiels im Einzelnen erläutert. Es zeigen:
- Fig. 1 und 2: perspektivische Schrägansichten mit durchsichtig gezeichnetem Ventilgehäuse, gesehen in unterschiedlichen Blickrichtungen, wobei die geöffnete Schaltposition dargestellt ist;
- Fig. 3: eine untere Ansicht der geöffneten Schaltposition mit aufgeschnittenem Ventilgehäuse;
- Fig. 4 bis 6: den Fig. 1 bis 3 entsprechende Darstellungen, wobei jeweils die geschlossene Schaltposition dargestellt ist;
- Fig. 7 und 8: den Fig. 1 und 4 ähnliche Darstellungen, wobei eine einer Zwischenstellung entsprechende Schaltposition gezeigt ist;
- Fig. 9 und 10: den Fig. 7 und 8 entsprechende Darstellungen, wobei eine einer zweiten Zwischenstellung entsprechende Schaltposition dargestellt ist; und
- Fig. 11 und 12: den Fig. 9 und 10 entsprechende Darstellungen einer einer dritten Zwischenstellung entsprechenden Schaltposition.

Der in den Figuren dargestellte Kugelhahn weist ein Ventilgehäuse 2 in der Form eines Würfels aus einem metallischen Werkstoff, beispielsweise einem für Armaturen geeigneten Rotguss, auf. Zwischen einander gegenüberliegenden Seitenwänden 4 und 6 ist, zentral gelegen, eine durchgehende Bohrung 8 gebildet, die an ihren an die Seitenwand 4 und an die Seitenwand 6 angrenzenden Endbereichen jeweils ein Innengewinde 10 aufweist. Zur Bildung je einer Fluidanschlussstelle sind Verbindungsteile 12 und 14 für im Übrigen nicht dargestellte Leitungen mit den Innengewinden 10 verschraubt. Die Verbindungsteile 12, 14 weisen zwischen äußerem Sechskantkopf 16 und mit dem Innengewinde 10 verschraubten Außengewindeabschnitt 18 jeweils eine Ringnut 20 für einen die Abdichtung an den Fluidanschlussstellen bildenden O-Ring 22 auf.

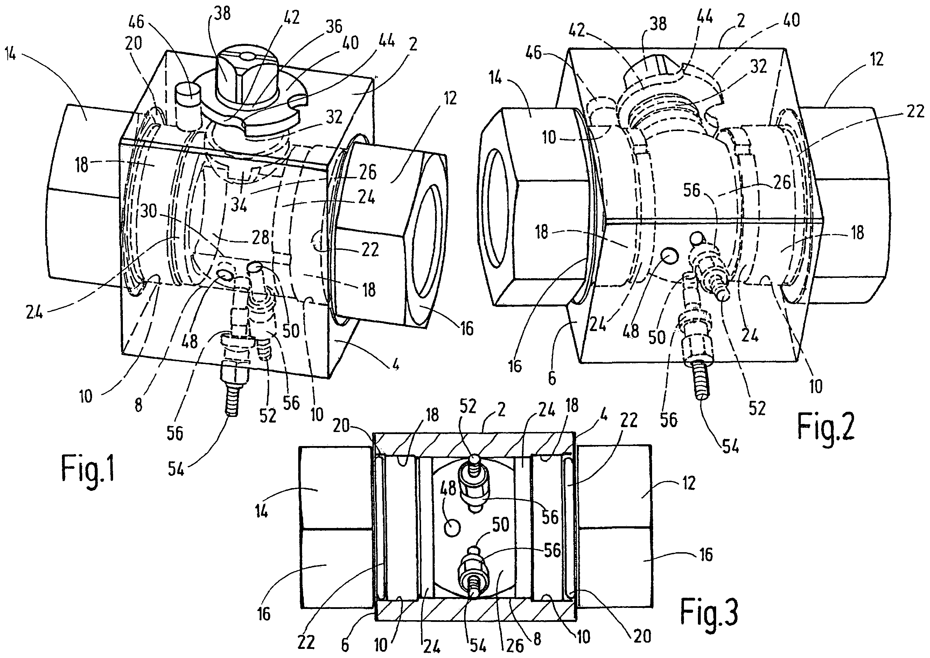

Am Ende des Außengewindeabschnittes 18 der Verbindungsteile 12, 14 bildet ein Dichtring 24 aus PTFE eine Art Weichdichtung für eine zwischen den Dichtringen 24 aufgenommene Ventilkugel 26. Dabei bilden die Dichtringe 24 der Kugelform der Ventilkugel 26 angepasste Dichtschalen 28 (s. Fig. 1) für die daran schwimmend gelagerte Ventilkugel 26. Diese weist als Fluiddurchgang eine Bohrung 30 auf, die den gleichen Durchmesser besitzt wie der Durchlassquerschnitt der Verbindungsteile 12, 14 der Fluidanschlussstellen. Bei der in Fig. 1 bis 3 gezeigten Position der Ventilkugel 26, bei der deren Bohrung 30 mit den Verbindungsteilen 12, 14 fluchtet und sich der Kugelhahn in dem geöffneten Zustand befindet, bleibt der volle Querschnitt der Fluidströmung über den Kugelhahn beibehalten, so dass sich praktisch keine Strömungsverluste ergeben.

Für die Einstellung der Drehposition der Ventilkugel 26 ist eine Schaltwelle 32 vorgesehen, die über ein Kupplungsteil 34 mit der Ventilkugel 26 auf Drehung verbunden ist und einen über die in Fig. 1 obenliegend sichtbare Oberseite des Ventilgehäuses 2 mit einem Wellenzapfen 36 vorsteht. Der Wellenzapfen 26 weist einen Vierkant 38 für den Angriff eines Betätigungselements, wie einem nicht dargestellten Handhebel, auf. Mit dem Wellenzapfen 36 ist eine Kurvenscheibe 40 auf Drehung verbunden, die am Umfang eine Kurvenbahn 42 bildet, die sich über einen Winkelbereich von 90° erstreckt und an beiden Enden einen Endanschlag 44 bildet, der in Zusammenwirkung mit einem Anschlagzapfen 46, der aus der Oberseite des Ventilgehäuses 2 vorsteht, die Drehung der Schaltwelle 32 auf einen Drehwinkel von 90° begrenzt.

Für eine Sensoranordnung, die die Schaltposition der Ventilkugel 26 direkt an dieser abfragt, weist der erfindungsgemäße Kugelhahn an der Außenseite der Ventilkugel 26 vorgesehene Lagemarken auf, die durch Sackbohrungen 48 und 50 gebildet sind. Die Sackbohrungen 48,50 sind in einer Musteranordnung derart in die Oberfläche der Ventilkugel 26 eingebracht, dass jede Sackbohrung 48, 50 zur Drehachse der Schaltwelle 32 versetzt ist. Die Ventilkugel 26 ist aus einem ferromagnetische Eigenschaft aufweisenden Werkstoff gefertigt, und die Sensoranordnung, die zum Ablesen der durch die Sackbohrungen 48, 50 gebildeten Lageinformation der Kugel 26 vorgesehen ist, weist als Sensoren zwei induktive Näherungsschalter 52 und 54 auf. Diese sind als Schraubeinsätze in Bohrungen, die von der Unterseite des Ventilgehäuses 2, die dem Wellenzapfen 36 der Schaltwelle 32 entgegengesetzt ist, derart eingebracht sind, dass sie sich bis in die Bohrung 8 des Ventilgehäuses 2 erstrecken.

Die Näherungsschalter 52, 54 sind, wie am besten aus Fig. 3 zu entnehmen ist, im Abstand voneinander auf einer geraden Linie angeordnet, die die Drehachse der Schaltwelle 32 schneidet und zur Richtung der Bohrung 30 der in der Offenstellung befindlichen Ventilkugel 26 im rechten Winkel verläuft. Die in die zugehörigen Durchgangsbohrungen eingeschraubten Näherungsschalter 52, 54 weisen einen eine Dichtfläche bildenden Bund 56 auf, um mit einer Dichtfläche in der zugehörigen Bohrung eine Abdichtung mittels eines Dichtelements (nicht sichtbar) zu bilden, so dass der Totraum im Ventilgehäuse 2 zwischen Bohrung 8 und Außenfläche der Kugel 26 druckfest nach außen abgedichtet ist. Die Näherungsschalter 52, 54 erstrecken sich mit ihrem Kern- oder Sensorende bis unmittelbar an die Oberfläche der Kugel 26.

Bei der ferromagnetischen Eigenschaft der Ventilkugel 26 ergibt sich eine Änderung der Induktivität, wenn bei einer Drehbewegung der Kugel 26 eine Sackbohrung 48 oder 50 zur Fluchtung mit einem Sensorende eines Näherungsschalters 52 oder 54 gelangt. Daher erzeugt der betreffende Näherungsschalter 52 oder 54 bei exakter Ausrichtung auf eine Sackbohrung 48, 50 ein Schaltsignal. Bei der offenen Schaltposition des Kugelhahnes, wie in Fig. 1 bis 3 gezeigt, erzeugt der Näherungsschalter 54 durch Fluchtung mit der Sackbohrung 50 ein Schaltsignal, während der Näherungsschalter 52, der sich außerhalb des Bereichs einer Sackbohrung 48, 50 befindet, kein Schaltsignal erzeugt. Die Sensoranordnung liefert daher eine eindeutige Anzeige, dass sich die Ventilkugel 26 in der geöffneten Schaltposition befindet.

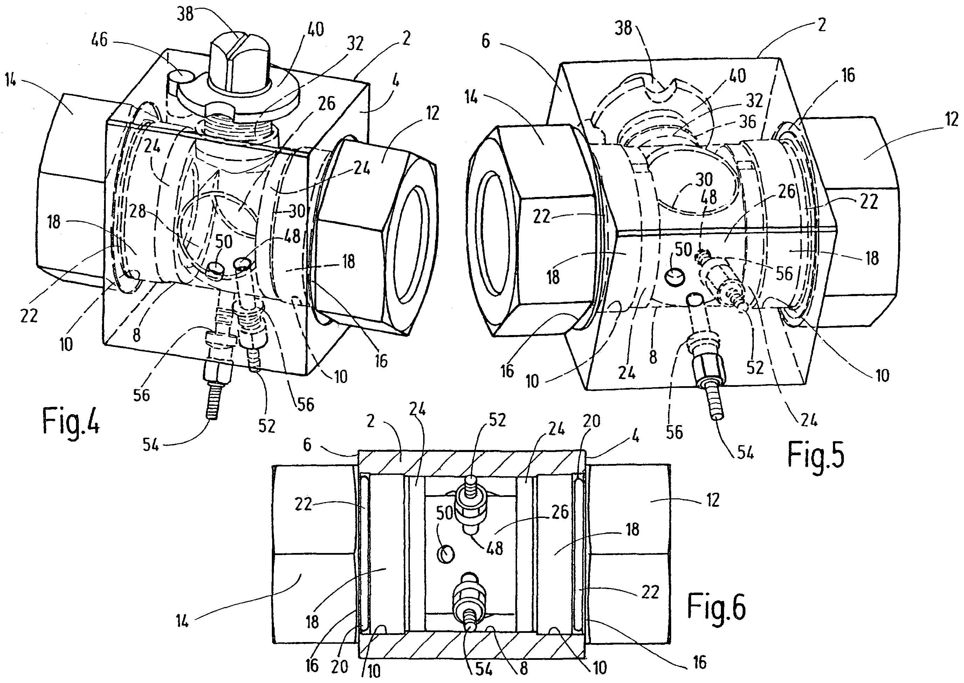

Die Fig. 4 bis 6 zeigen die Schaltposition bei geschlossenem Kugelhahn. Wie am deutlichsten aus Fig. 6 zu ersehen ist, befindet sich hierbei die Sackbohrung 48 in Fluchtung mit dem Näherungsschalter 52, so dass dieser das Schaltsignal erzeugt, während der Näherungsschalter 54 außerhalb des Bereichs einer Sackbohrung 48 oder 50 ist und kein Schaltsignal erzeugt. Somit ist eindeutig angezeigt, dass der Kugelhahn geschlossen ist. Gemäß Darstellung nach der Fig. 6 liegen beiden Sensoren 52, 54 gemeinsam in einer vertikalen Ebene, die senkrecht zur möglichen Durchflussrichtung des Kugelhahnes in seiner vollgeöffneten Stellung verläuft. Ferner schließen die fiktiven Verlängerungen der Längsachsen der beiden Sensoren 52, 54 in Richtung auf die Ventilkugel 26 zu gesehen einen spitzen Winkel miteinander ein. Während der Sensor 52 sich in deckender Lage mit dem Marker oder der Markierung 48 befindet, ist der andere Marker oder Markierung 50 in Blickrichtung auf die Fig. 6 gesehen, links von den beiden Sensoren 50, 52 angeordnet und bildet mit deren Enden der jeweiligen fiktiven Achsverlängerung in etwa auf die Ventilkugel 26 selbst ein fiktives rechtwinkliges und insoweit sphärisches Dreieck aus, das auf der Ventilkugel 26 angeordnet im linken freien Dreieckspunkt die Markerstelle 50 aufweist. Die Schenkellängen zwischen dem Marker 50 und dem jeweiligen Sensor 52, 54 im Rahmen des fiktiven sphärischen Dreieckes ist dabei geringer, vorzugsweise etwa 2/3 so groß wie die Schenkellänge zwischen den Sensoren 52, 54 selbst.

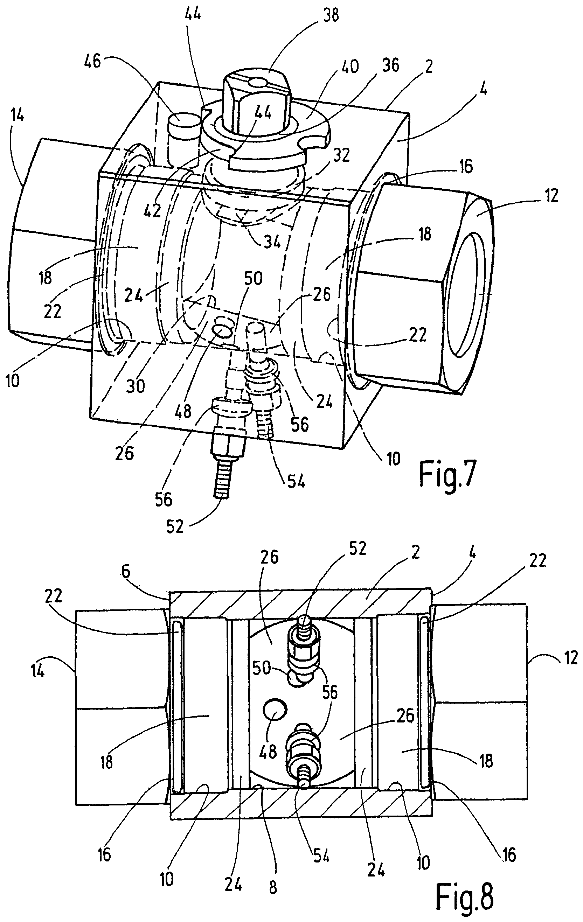

Fig. 7 und 8 zeigen demgegenüber eine Zwischenstellung der Ventilkugel 26, wobei die den Fluiddurchgang bildende Bohrung 30 der Ventilkugel 26 in Fig. 7 leicht schräg von links nach rechts unten verläuft. Beide Sackbohrungen 48 und 50 sind außer Fluchtung mit einem Näherungsschalter 52, 54, so dass keinerlei Schaltsignal erzeugt ist. Fehlende Signalerzeugung signalisiert eindeutig, dass die Schaltposition der Ventilkugel 26 undefiniert ist.

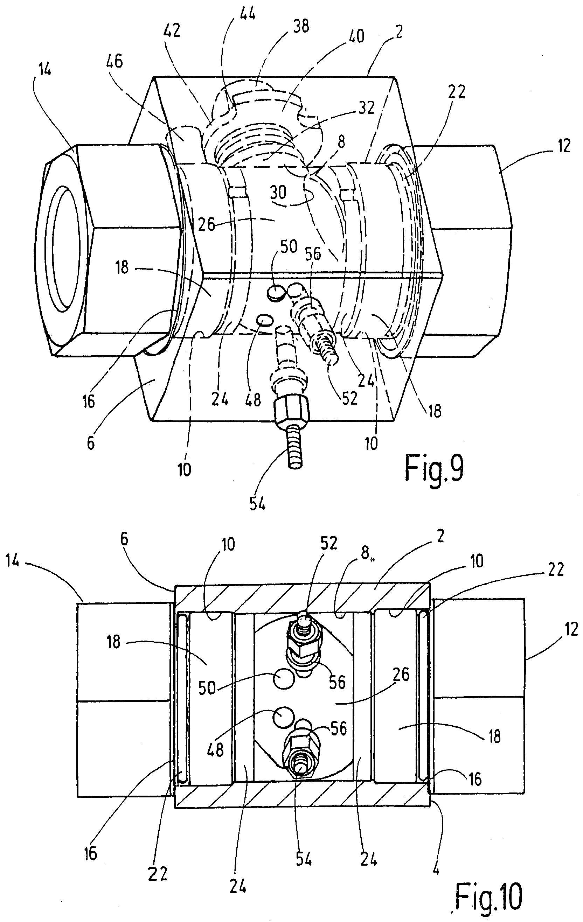

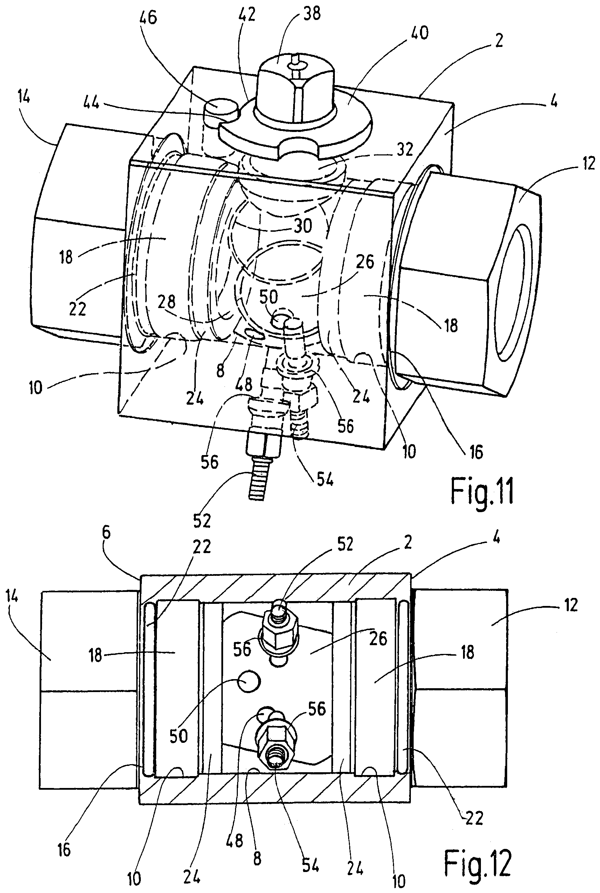

Die Fig. 9 und 10 sowie die Fig. 11 und 12 verdeutlichen zwei weitere verschiedene undefinierte Zwischenstellungen der Ventilkugel 26, wobei wiederum keiner der Näherungsschalter 52, 54 ein Schaltsignal erzeugt, weil beide Sackbohrungen 48 und 50 außer Fluchtung mit einem Näherungsschalter 52, 54 sind. Bei dem Beispiel von Fig. 9 und 10 ist die Ventilkugel 26 derart schräg gestellt, dass sich etwa ein Viertel des vollen Öffnungsquerschnitts ergibt. Wie aus Fig. 10 am deutlichsten zu ersehen ist, befinden sich beide Sackbohrungen 48, 50 außerhalb des Bereichs der Näherungsschalter 52, 54, so dass keiner ein Schaltsignal erzeugt. Bei dem weiteren Beispiel von Fig. 11 und 12 ist der Kugelhahn fast vollständig geschlossen. Bei dieser undefinierten Zwischenstellung erzeugt wiederum keiner der Näherungsschalter 52, 54 ein Schaltsignal, weil beide Sackbohrungen 48, 50 außer Fluchtung mit einem Näherungsschalter 52, 54 sind.

Da die Schaltsignale als digitales Ein-Aus-Signal erzeugt werden, eignet sich die Sensoranordnung für eine digitale SPS-Steuerung. In der nachfolgenden Wahrheitstabelle ist für einen Kugelhahn mit geradlinigem Fluiddurchgang (Bohrung 30) die Abfolge der Signale bei geöffneter Schaltstellung, geschlossener Schaltstellung und undefinierter Schaltstellung aufgelistet. Bei Ausbildung eines Kugelhahns als 3-Wege-Armatur mit einem L-förmigen Durchgang der Ventilkugel und einem Drehbereich der Schaltwelle von 90°, wie dies beispielhaft in DE 299 06 687 U1 aufgezeigt ist, lässt sich die Endlagenkontrolle in entsprechender Weise verwirklichen, wenn mindestens zwei Näherungsschalter und drei Sackbohrungen an der Ventilkugel vorgesehen sind.

| | Wahrheitsliste | |
|---|---|---|
| | Sensor 52 | Sensor 54 |
| geöffnete Schaltstellung | 0 | 1 |
| geschlossene Schaltstellung | 1 | 0 |
| undefinierte Schaltstellung | 0 | 0 |

Für eine 3-Wege Armatur mit T-förmigem Durchgang der Ventilkugel und einem Drehbereich der Schaltwelle von 180° lässt sich die Endlagenkontrolle in entsprechender Weise verwirklichen, wenn mindestens drei Näherungsschalter und mindestens zwei Sackbohrungen an der Ventilkugel vorgesehen sind. Die Wahrheitstabelle wäre dann um eine Zeile und Spalte zu erweitern. In entsprechender Weise lässt sich dadurch für die erste geöffnete Schaltstellung die Signalfolge 010, für die zweite geöffnete Schaltstellung die Signalfolge 100, für die dritte geöffnete Schaltstellung die Signalfolge 101 und für die undefinierte Schaltstellung die Signalfolge 000 generieren.

Es versteht sich, dass die Signale auch invers sein können, also dass ein 0 anstelle einer 1 und eine 1 anstelle einer 0 verwendet wird. Hierbei bleibt die Eindeutigkeit der Signalfolge erhalten.

## Patentansprüche

1. Kugelhahn, mit einem Ventilgehäuse (2), das mindestens zwei Fluidanschlussstellen (12, 14) und eine im Ventilgehäuse (2) befindliche ferromagnetische Ventilkugel (26) aufweist, die mittels einer Schaltwelle (32), die zumindest teilweise in das Ventilgehäuse (2) eingreift, in Schaltpositionen drehbetätigbar ist, in denen über einen Fluiddurchgang (30) der Ventilkugel (26) eine Fluidverbindung zwischen Fluidanschlussstellen (12, 14) freigegeben oder gesperrt ist, wobei eine Sensoranordnung (52, 54) vorgesehen ist, die die jeweilige Schaltposition der Ventilkugel (26) durch Ablesen einer an dieser befindlichen Lageinformation (48, 50) erkennt und die zwei in das Ventilgehäuse (2) eingesetzte Sensoren (52, 54) aufweist, wobei als Sensoren induktive Näherungsschalter (52, 54) vorgesehen sind, die zur Erzeugung eines Schaltsignals die auf einen Sensor (52, 54) ausgerichtete Position einer Vertiefung, vorzugsweise in Form einer Sackbohrung (48, 50), erkennen, die in der Außenfläche der Ventilkugel (26) vorgesehen ist.

2. Kugelhahn nach Anspruch 1, **dadurch gekennzeichnet, dass** eine die Lageinformation (48, 50) berührungslos ablesende Sensoranordnung (52, 54) vorgesehen ist.

3. Kugelhahn nach Anspruch 1 oder 2, **dadurch gekennzeichnet, dass** die Lageinformation durch ein an der Ventilkugel (26) befindliches Muster aus mehr als einer Lagemarke (48, 50) gebildet ist und dass die Sensoranordnung zwei dem Ventilgehäuse (2) zugeordnete, Lagemarken (48, 50) erkennende Sensoren (52, 54) aufweist.

4. Kugelhahn nach einem der vorstehenden Ansprüche, **dadurch gekennzeichnet, dass** die Ventilkugel (26) einen im rechten Winkel zur Drehachse (36) der Schaltwelle (32) geradlinig verlaufenden Fluiddurchgang (30) und als Lageinformation zwei Lagemarken (48, 50) aufweist, die jede zur Drehachse (36) versetzt angeordnet sind.

5. Kugelhahn nach einem der vorstehenden Ansprüche, **dadurch gekennzeichnet, dass** die zwei Sensoren (52, 54) im Abstand voneinander auf einer geraden Linie angeordnet sind, die die Drehachse (36) der Schaltwelle (32) schneidet und zur Richtung des in der Offenstellung befindlichen Fluiddurchgangs (30) der Ventilkugel (26) im rechten Winkel verläuft.

6. Kugelhahn nach einem der vorstehenden Ansprüche, **dadurch gekennzeichnet, dass** die zwei Sensoren als Einsätze, vorzugsweise durch Einschrauben, in Durchgangsbohrungen des Ventilgehäuses (2) aufgenommen sind und dass in den Durchgangsbohrungen und an den Einsätzen Dichtflächen (56) für ein eine druckfeste Abdichtung bildendes Dichtelement gebildet sind.

## Claims

1. A ball valve, comprising a valve housing (2) that has at least two fluid connection points (12, 14) and a ferromagnetic valve ball (26) located in the valve housing (2), which valve ball can be rotatably actuated into switched positions by means of a switching shaft (32), at least part of which engages in the valve housing (2), in which switched positions a fluid connection between fluid connection points (12, 14) is released or blocked via a fluid passage (30) of the valve ball (26), a sensor arrangement (52, 54) being provided which identifies the respective switched position of the valve ball (26) by reading off positional information (48, 50) located thereon, and which has two sensors (52, 54) inserted into the valve housing (2), inductive proximity switches (52, 54) being provided as sensors which identify the position of a depression, aligned with a sensor (52, 54) and preferably in the form of a blind hole (48, 50), which is provided in the outer surface of the valve ball (26) in order to generate a switch signal.

2. The ball valve according to Claim 1, **characterised in that** a sensor arrangement (52, 54) reading off the positional information (48, 50) in a contact-free manner is provided.

3. The ball valve according to Claim 1 or 2, **characterised in that** the positional information is formed by a pattern consisting of more than one positional marking (48, 50) located on the valve ball (26), and that the sensor arrangement has two sensors (52, 54) assigned to the valve housing (2) that identify positional markings (48, 50).

4. The ball valve according to any of the preceding claims, **characterised in that** the valve ball (26) has a fluid passage (30) running in a straight line at a right angle to the axis of rotation (36) of the switching shaft (32) and two positional markings (48, 50) as positional information, which positional markings are each arranged offset relative to the axis of rotation (36).

5. The ball valve according to any of the preceding claims, **characterised in that** the two sensors (52, 54) are arranged spaced apart from one another along a straight line which intersects the axis of rotation (36) of the switching shaft (32) and runs at a right angle to the direction of the fluid passage (30) of the valve ball (30) in the open position.

6. The ball valve according to any of the preceding claims, **characterised in that** the two sensors are incorporated as inserts, preferably by screwing in, in through-bores of the valve housing (2), and that sealing surfaces (56) for a sealing element forming a pressure-resistant seal are formed in the through-bores and on the inserts.

## Revendications

1. Robinet à boisseau sphérique, comprenant un corps (2) de robinet, qui a au moins deux points (12, 14) de raccord pour du fluide et un boisseau (26) sphérique ferromagnétique se trouvant dans le corps (2) du robinet et pouvant être mis en rotation au moyen d'un arbre (32) de manoeuvre, qui pénètre au moins en partie dans le corps (2) du robinet, dans des positions de manoeuvre dans lesquelles, par un passage (30) pour du fluide du boisseau (26) sphérique, une liaison fluidique, entre des points (12, 14) de raccord pour du fluide, est dégagée ou fermée, dans lequel il est prévu un agencement (52, 54) de capteurs, qui détecte la position de manoeuvre du boisseau (26) sphérique par lecture d'une information (48, 50) de position se trouvant sur celui-ci et qui a deux capteurs (52, 54) insérés dans le corps (2) du robinet, dans lequel il est prévu, comme capteurs, des interrupteurs (52, 54) inductifs de proximité qui, pour produire un signal de manoeuvre, détectent la position, dirigée sur un capteur (52, 54), d'une cavité, de préférence sous la forme d'un trou (48, 50) borgne, prévue dans la surface extérieure du boisseau (26) sphérique.

2. Robinet à boisseau sphérique suivant la revendication 1, **caractérisé en ce qu'**il est prévu un dispositif (52, 54) de capteurs lisant, sans contact, l'information (48, 50) de position.

3. Robinet à boisseau sphérique suivant la revendication 1 ou 2, **caractérisé en ce que** l'information de position est formée par un motif se trouvant sur le boisseau (26) sphérique et constitué de plus d'un repère (48, 50) de position et **en ce que** l'agencement de capteurs a deux capteurs (52, 54) détectant les repères (48, 50) de position associés au corps (2) du robinet.

4. Robinet à boisseau sphérique suivant l'une des revendications précédentes, **caractérisé en ce que** le boisseau (26) sphérique a un passage (30) pour du fluide, s'étendant en ligne droite à angle droit avec l'axe (36) de rotation de l'arbre (32) de manoeuvre et, comme information de position, deux repères (48, 50) de position disposés chacun de manière décalée par rapport à l'axe (36) de rotation.

5. Robinet à boisseau sphérique suivant l'une des revendications précédentes, **caractérisé en ce que** les capteurs (52, 54) sont disposés à distance l'un de l'autre sur une ligne droite, qui coupe l'axe (36) de rotation de l'arbre (32) de manoeuvre et qui s'étend à angle droit dans la direction du passage (30) pour du fluide, se trouvant dans la position d'ouverture, du boisseau (26) sphérique.

6. Robinet à boisseau sphérique suivant l'une des revendications précédentes, **caractérisé en ce que** les deux capteurs sont logés en tant qu'inserts, de préférence par vissage, dans des trous traversants du corps (2) du robinet et **en ce que**, dans les trous de passage et sur les inserts, sont formées des surfaces (56) d'étanchéité pour un élément d'étanchéité donnant une étanchéité résistante à la pression.
